# EUROPEAN PATENT SPECIFICATION

(11) **EP 1 103 579 B1**
(45) Date of publication and mention of the grant of the patent: **23.10.2002**
(21) Application number: 99123327.1
(22) Date of filing: 23.11.1999
(51) Int. Cl.: C09B 61/00, A23L 1/275

(54) **A process for the extraction of lycopene**
Verfahren zur Extraktion von Lycopin
Procédé d'extraction de lycopène

(43) Date of publication of application: 30.05.2001
(73) Proprietor: SOCIETE DES PRODUITS NESTLE S.A., 1800 Vevey (CH)
(72) Inventor: Bortlik, Karlheinz, 1073 Savigny (CH); Mortezavi, Laure, 1009 Prilly (CH); Saucy, Françoise, 1807 Blonay (CH)
(74) Representative: Thomas, Alain

(56) References cited:
- EP-A- 0 252 501
- EP-A- 0 818 225
- WO-A-96/13178
- WO-A-97/48287
- WO-A-98/43620

## Description

The present invention concerns a process for the extraction of lycopene.

Lycopene,which belongs to the family of the carotenoids, is an important natural food coloring agent in the red region. Lycopene is present naturally in a number of fruits, primarily in tomatoes and watermelon. It is possible to extract this coloring agent by different extraction processes. The US Patent No. 4'781'936 for example, concerns already a process for isolating a yellow coloring component from tomato peel, which comprises exposing tomato peel to a non-toxic polar extraction solvent, said solvent being ethanol, lower alcohols, ethers, ketones and aldehydes. The pure lycopene compound has more a red color, whereas the product obtained by this above mentioned process allows the production of a final compound having more a yellow color. The reason of this difference is that according to this process, it is not possible to obtain a real pure lycopene compound , but more a mixture of the different carotenoids present in the basic raw material. The European Patent Application EP 0 818 225 A relates to a process for the preparation of pure lycopene or of lipophilic extracts containing it from tomatoes. This process involves extraction with aliphatic or aromatic hydrocarbons or water-immiscible solvents in the presence of phospholipids as surfactant and stabilizing agents.

The aim of the present invention is to develop a process, wherein it is possible to have mainly the extraction of lycopene with a high yield of extraction of said lycopene.

The invention concerns a process for the extraction of lycopene from a product taken in the group consisting of tomato, tomato pomace, pink grapefruit, watermelon, guava and papaya, wherein said process comprises the following steps :
- removing the impurities and water from the product by subjecting the product to at least one washing with boiling ethanol, said ethanol having a water content from 20 to 30 %,
- extracting the purified product by subjecting said product to at least one extraction with boiling ethanol having an alcohol content of at least 92 %,
- recovering the ethanol solution and cooling said solution to a temperature around the room temperature to obtain lycopene crystals and
- filtrating said solution to recover the lycopene crystals.

The basic product to be extracted according to the invention is more preferably tomato or tomato pomace. Under tomato pomace in the present specification, it is to be understood an industrial waste material from tomato paste production. This tomato pomace includes the peels and the seeds. Tomato can be every type of tomatoes available in the world.

It is important according to the process of the invention to have a preliminary washing of the product to be extracted. The reason is to remove the more polar compounds, as xanthophylls, the polar carotenoids, and also in the case of the extraction of tomato pomace, the pesticides present in the peel slurry. This washing is carried out with ethanol, at the boiling temperature of said ethanol. A further important condition is to have a water content of the ethanol comprised between 20 and 30 %, more preferably around 28 %, to avoid any possibility to dissolve the lycopene. The duration of said washing is normally comprised between 15 and 40 minutes, more preferably around 30 minutes. All the percentages in the present specification are given in weight. The washing is made with an excess of boiling ethanol : the ratio ethanol/product to be extracted is normally around 15:1.

It is possible to proceed with a single washing of the product. The washing can be also carried out in two steps, wherein said washings are done in order to have a water content between 20 and 30 %. For the washings, the water content is preferably around 28 %. The duration of the second washing is the same as the first one, also at the same temperature.

At this stage, it is possible to begin the real extraction on the base of the purified product. The ethanol phase from the washing can be distillated to be used again, for example for the extraction step. The conditions to have an efficient extraction of the product is to work with an ethanol having an alcohol content of at least 92 %, most preferably from 92 to 96 % and at the boiling temperature of said ethanol. Whereas a sufficiently high temperature is easy to reach, the ethanol produced by distillation of the filtrates obtained during the 2 purification steps has a too low concentration. An installation for rectification is necessary for producing adequate ethanol. Accordingly, commercial ethanol is preferably used in the lycopene extraction process. The extraction temperature is normally comprised between 70 and 75 °C and the duration is between 2 and 10 minutes at an alcohol content of 94 %.

A one-step extraction can be sufficient. In order to increase the yield of extraction, a second extraction with the ethanol of the first step can be carried out. The different conditions of duration, temperature and content of water of the ethanol used are the same as for the first extraction step. At the end of the extraction, the spent product is discarded and the ethanol solution is left either to cool from itself, or cooled with any cooling medium to reach a temperature between 4 °C and room temperature. The solution is left overnight , that is during 2 to 12 hours, so that crystals of lycopene appear.

These crystals are then isolated from the cold ethanol by filtration or any other way. The crystals has a deep red colour, which makes clear that the main compound is lycopene.

The process of extraction according to the invention allows to reach a yield of more than half of the initial amount of lycopene. By considering the specific example of tomato pomace, the concentration of lycopene varies from 28 µg to 1700 µg of lycopene/g of dry material.

The obtained lycopene crystals are then ready to be used. This compound is a multifunctional natural food ingredient. It is first a colorant for drinks, pasta, ice cream and cereals. It is secondly an efficient antioxydant. Finally, lycopene is biologically active by contributing to the antioxydative defense system of the organism. It is also responsible for the reduction of cancer risk and cardiovascular disease. Lycopene can be used alone or in admixtures with beta-carotene, alpha-tocopherol or flavonoids.

The following of the specification is now made in relation with the example.

### Example

300 kg of tomato peel slurry were introduced in an extractor and mixed with 413 kg of 94 % ethanol. The presence of water in the tomato peel slurry gives an ethanol having around 72 % ethanol. The mixture was boiled for 15 min. under stirring with reflux at 74 °C and filtered at 70 °C. The precipitate was mixed with 130 kg of demineralised water and 316 kg of 94 % ethanol, and boiled for 15 min under stirring with reflux at 74 °C. The mixture was filtered at 70 °C.

The purified peel slurry was extracted for 30 min. successively with 220 kg, 220 kg and finally 250 kg of 94 % ethanol under stirring with reflux at 72 °C and filtrated. The 3 filtrates were pumped into the evaporator, mixed well at 70 °C and finally transfered to a separated tank. The tank was left overnight at about 10 °C for lycopene crystallization. Lycopene was filtered at 10 °C with a Seitz filter. About 22.2 g of lycopene were recovered.

## Claims

1. A process for the extraction of lycopene from a product taken in the group consisting of tomato, tomato pomace, pink grapefruit, watermelon, guava and papaya, wherein said process comprises the following steps :
- removing the impurities and water from the product by subjecting the product to at least one washing with boiling ethanol, said ethanol having a water content from 20 to 30 %,
- extracting the purified product by subjecting said product to at least one extraction with boiling ethanol having an alcohol content of at least 92 %,
- recovering the ethanol solution and cooling said solution to a temperature around the room temperature to obtain lycopene crystals and
- filtrating said solution to recover the lycopene crystals.

2. A process according to claim 1, wherein the removing of the impurities is carried out during 5 to 40 minutes.

3. A process according to any of claims 1 or 2, wherein for the removing of the impurities the ratio ethanol/product is around 15:1.

4. A process according to any of claims 1 to 3, wherein the removing of the impurities is carried out with two ethanol treatments.

5. A process according to any of claims 1 to 4, wherein the extraction of the purified product is carried out during 2 to 10 minutes with an ethanol having an alcohol content of 94 %.

6. A process according to claim 5, wherein two extractions are carried out with ethanol.

7. A process according to any of claims 1 to 6, wherein the recovering of the lycopene crystals is carried out at a temperature comprised between 4 °C and room temperature during 2 to 12 hours.

## Patentansprüche

1. Verfahren zur Extraktion von Lycopin aus einem Produkt der Gruppe, die besteht aus Tomate, Tomatentrester, roter Grapefruit, Wassermelone, Guave und Papaya, wobei das Verfahren die folgenden Schritte umfaßt:
- Entfernen der Verunreinigungen sowie von Wasser aus dem Produkt, indem man das Produkt wenigstens einem Waschen mit siedendem Ethanol unterzieht, wobei das Ethanol einen Wassergehalt von 20 bis 30% aufweist,
- Extrahieren des gereinigten Produkts dadurch, daß man das Produkt wenigstens einer Extraktion mit siedendem Ethanol mit einem Alkoholgehalt von wenigstens 92% unterzieht,
- Gewinnen der Ethanollösung und Abkühlen der genannten Lösung auf eine Temperatur von etwa Raumtemperatur, um Lycopinkristalle zu erhalten, und
- Filtrieren der genannten Lösung, um die Lycopinkristalle zu gewinnen.

2. Verfahren nach Anspruch 1, bei dem die Entfernung der Verunreinigungen für 5 bis 40 min durchgeführt wird.

3. Verfahren nach irgendeinem der Ansprüche 1 oder 2, bei dem zur Entfernung der Verunreinigungen das Verhältnis Ethanol/Produkt etwa 15:1 beträgt.

4. Verfahren nach irgendeinem der Ansprüche 1 bis 3, bei dem das Entfernen der Verunreinigungen mit zwei Ethanolbehandlungen durchgeführt wird.

5. Verfahren nach irgendeinem der Ansprüche 1 bis 4, bei dem die Extraktion des gereinigten Produkts innerhalb von 2 bis 10 min mit Ethanol mit einem Alkoholgehalt von 94% durchgeführt wird.

6. Verfahren nach Anspruch 5, bei dem zwei Extraktionen mit Ethanol durchgeführt werden.

7. Verfahren nach irgendeinem der Ansprüche 1 bis 6, bei dem die Gewinnung der Lycopinkristalle bei einer Temperatur zwischen 4°C und Raumtemperatur während 2 bis 12 h durchgeführt wird.

## Revendications

1. Procédé pour l'extraction du lycopène d'un produit choisi dans le groupe consistant en la tomate, le marc de tomate, le pamplemousse rose, la pastèque, la goyave et la papaye, ledit procédé comprenant les étapes consistant :
- à éliminer les impuretés et l'eau du produit en soumettant le produit à au moins un lavage avec de l'éthanol bouillant, ledit éthanol ayant une teneur en eau de 20 à 30 %,
- à extraire le produit purifié en soumettant ledit produit à au moins une extraction avec de l'éthanol bouillant ayant une teneur en alcool d'au moins 92 %,
- à recueillir la solution éthanolique et refroidir ladite solution à une température proche de la température ambiante pour obtenir des cristaux de lycopène, et
- à filtrer ladite solution pour recueillir les cristaux de lycopène.

2. Procédé suivant la revendication 1, dans lequel l'élimination des impuretés est effectuée pendant un temps de 5 à 40 minutes.

3. Procédé suivant l'une quelconque des revendications 1 et 2, dans lequel, pour l'élimination des impuretés, le rapport éthanol/produit est égal à environ 15:1.

4. Procédé suivant l'une quelconque des revendications 1 à 3, dans lequel l'élimination des impuretés est effectuée par deux traitements avec de l'éthanol.

5. Procédé suivant l'une quelconque des revendications 1 à 4, dans lequel l'extraction du produit purifié est effectuée pendant un temps de 2 à 10 minutes avec un éthanol ayant une teneur en alcool de 94 %.

6. Procédé suivant la revendications 5, dans lequel deux extractions sont effectuées avec de l'éthanol.

7. Procédé suivant l'une quelconque des revendications 1 à 6, dans lequel les cristaux de lycopène sont recueillis à une température comprise dans l'intervalle de 4 °C à la température ambiante pendant un temps de 2 à 12 heures.
